(19) Europäisches Patentamt / European Patent Office / Office européen des brevets

(11) **EP 4 254 549 B1**

(12) **EUROPEAN PATENT SPECIFICATION**

(45) Date of publication and mention
of the grant of the patent:
**06.05.2026 Bulletin 2026/19**

(21) Application number: **21897600.9**

(22) Date of filing: **28.10.2021**

(51) International Patent Classification (IPC):
*H01M 4/14* $^{(2006.01)}$   *H01M 4/62* $^{(2006.01)}$
*H01M 4/68* $^{(2006.01)}$   *H01M 10/12* $^{(2006.01)}$
*H01M 50/463* $^{(2021.01)}$

(52) Cooperative Patent Classification (CPC):
**H01M 4/68; H01M 4/14; H01M 4/62; H01M 4/622;
H01M 10/06; H01M 10/12; H01M 50/44;
H01M 50/463; Y02E 60/10**

(86) International application number:
**PCT/JP2021/039744**

(87) International publication number:
**WO 2022/113624 (02.06.2022 Gazette 2022/22)**

(54) **LEAD-ACID BATTERY**

BLEISÄUREBATTERIE

BATTERIE AU PLOMB-ACIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2020 JP 2020197587**

(43) Date of publication of application:
**04.10.2023 Bulletin 2023/40**

(73) Proprietor: **GS Yuasa International Ltd.
Kisshoin, Minami-ku,
Kyoto-shi, Kyoto 601-8520 (JP)**

(72) Inventor: **OBAYASHI, Chihiro
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
| | |
|---|---|
| EP-A1- 3 680 980 | WO-A1-2019/087683 |
| WO-A1-2019/087683 | WO-A1-2020/241878 |
| CN-A- 101 937 996 | JP-A- H09 147 869 |
| JP-A- S5 147 237 | JP-A- S60 182 662 |
| JP-A- S60 182 662 | |

**EP 4 254 549 B1**

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), an electrolyte solution, and the like. Each electrode plate includes a current collector and an electrode material.
An additive may be added to constituent members of the lead-acid battery from the viewpoint of imparting various functions to a lead-acid battery.
Patent Document 1 proposes a lead-acid battery in which an electrolyte solution and/or an electrode active material molded product contain a polymer compound containing any one selected from the group consisting of polyvinyl alcohol, polyethylene glycol, polyvinylpyrrolidone, polyacrylic acid or an ester thereof having a polymerization degree of 30 or more and 3000 or less, or the polymer compound and colloidal barium sulfate particles.
Patent Document 2 proposes a negative electrode plate for a lead-acid battery in which a current collector is filled with a paste-type active material containing an expander, polyoxyperfluoroethylene phenylamine represented by a specific chemical formula is used as the expander, and the polyoxyperfluoroethylene phenylamine is contained in at 0.005 to 3 wt% with respect to the paste-type active material.
As the separator, not only a sheet- or mat-shaped separator, but also a bag-shaped separator may be used. For example, Patent Document 3 proposes a lead-acid battery in which a positive electrode plate obtained by filling a paste-like active material into a grid of a lead-calcium-tin (Pb-Ca-Sn) alloy containing calcium (Ca) at 0.05 to 0.07 wt% and tin (Sn) at 0.75 to 1.0 wt% is housed in a bag-shaped separator obtained by folding a microporous polyethylene film in a U shape, providing vertically parallel ribs on the inner side, and performing pressure-bonding with irregularities provided at both left and right ends in a mechanical manner.

PRIOR ART DOCUMENT

PATENT DOCUMENTS

Patent Document 1: JP-A-2000-149981
Patent Document 2: JP-A-9-147874
Patent Document 3: JP-A-5-307949

SUMMARY OF THE INVENTION

PROBLEMS TO BE SOLVED BY THE INVENTION

A positive current collector is elongated by corrosion as charge-discharge of a lead-acid battery is repeated. Therefore, if a positive electrode plate is housed in a bag-shaped separator, the life is exhausted by a short circuit associated with damage to the separator. In particular, in a high temperature cycle test, the elongation of the positive current collector is significant, and therefore life performance is considerably deteriorated when the positive electrode plate is housed in the bag-shaped separator. Meanwhile, it has become evident that when the positive electrode plate is housed in the bag-shaped separator, life performance in a deep discharge cycle test is improved.

MEANS FOR SOLVING THE PROBLEMS

The present invention relates to a lead-acid battery including at least one cell including an element and an electrolyte solution, in which

the element includes a negative electrode plate, a positive electrode plate, and a bag-shaped separator interposed between the negative electrode plate and the positive electrode plate,
the negative electrode plate includes a negative current collector and a negative electrode material,
the positive electrode plate includes a positive current collector and a positive electrode material,

2

the negative electrode material contains a polymer compound having a repeating structure of oxy $C_{2-4}$ alkylene units,

the positive current collector contains Sn, and

the bag-shaped separator includes a rib protruding toward the positive electrode plate, and houses the positive electrode plate.

BRIEF DESCRIPTION OF THE DRAWINGS

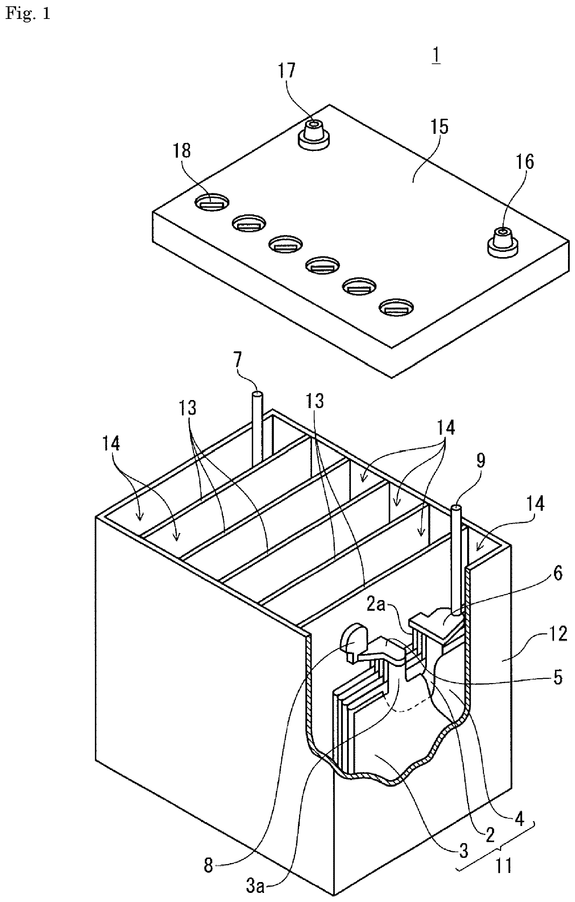

Fig. 1 is a partially cutaway exploded perspective view showing an appearance and an internal structure of a lead-acid battery according to one aspect of the present invention.

MODE FOR CARRYING OUT THE INVENTION

In a deep discharge cycle test in which charge-discharge including deep discharge is repeated, stratification is likely to proceed in which a specific gravity of an electrolyte solution in an upper portion of a lead-acid battery decreases and the specific gravity of the electrolyte solution in a lower portion of the lead-acid battery increases. If the stratification proceeds, lead sulfate is likely to accumulate in the lower portion of an electrode plate. If the accumulation of lead sulfate becomes significant, a phenomenon in which the accumulated lead sulfate is hardly reduced even when charge is performed (sulfation). Meanwhile, since a charge-discharge reaction is likely to occur on an upper side of the electrode plate, softening of the positive electrode material becomes remarkable in a portion on the upper side of the positive electrode plate. As a result, the life of the lead-acid battery is reduced.

It is effective to reduce a difference in specific gravity of the electrolyte solution in the vicinity of a negative electrode plate for suppressing stratification. Therefore, it has been heretofore considered that it is advantageous to house a negative electrode when a bag-shaped separator is used. A positive current collector is elongated by corrosion as charge-discharge of the lead-acid battery is repeated. The elongation of the positive current collector is particularly significant if charge-discharge is repeated at a high temperature (e.g. in a high temperature cycle test). In addition, if the positive electrode plate is housed in a bag-shaped separator, the separator is more likely to be damaged because oxidative degradation of the separator more easily proceeds as compared to a case where the negative electrode plate is housed in the separator. Therefore, from the viewpoint of avoiding a short circuit caused by damage to the bag-shaped separator, it is advantageous to house the negative electrode plate when the bag-shaped separator is used.

However, it has become evident that when the positive electrode plate is housed in the bag-shaped separator, stratification is unexpectedly suppressed and the life is improved in a deep discharge cycle test. However, as described above, in a high temperature cycle test, elongation of the positive current collector is significant, and therefore if the positive electrode plate is housed in the bag-shaped separator, the life is exhausted as the separator is damaged. Thus, if the positive electrode plate is housed in the bag-shaped separator, it is difficult to achieve both high life performance in a deep discharge cycle test and high life performance in a high temperature cycle test.

In view of the above, the lead-acid battery according to a non-claimed embodiment is a lead-acid battery including at least one cell including an element and an electrolyte solution. The element includes a negative electrode plate, a positive electrode plate, and a bag-shaped separator interposed between the negative electrode plate and the positive electrode plate. The negative electrode plate includes a negative current collector and a negative electrode material. The positive electrode plate includes a positive current collector and a positive electrode material. The negative electrode material contains a polymer compound having a peak in a range of 3.2 ppm or more and 3.8 ppm or less in a chemical shift of a $^1$H-NMR spectrum measured using deuterated chloroform as a solvent. The positive current collector contains Sn. The bag-shaped separator includes a rib protruding toward the positive electrode plate, and houses the positive electrode plate.

Note that the peak appearing in a chemical shift in a range of 3.2 ppm or more and 3.8 ppm or less in the $^1$H-NMR spectrum is derived from an oxy $C_{2-4}$ alkylene unit.

The lead-acid battery according to the present invention as defined in claim 1, is a lead-acid battery including at least one cell including an element and an electrolyte solution. The element includes a negative electrode plate, a positive electrode plate, and a bag-shaped separator interposed between the negative electrode plate and the positive electrode plate. The negative electrode plate includes a negative current collector and a negative electrode material. The positive electrode plate includes a positive current collector and a positive electrode material. The negative electrode material contains a polymer compound having a repeating structure of oxy $C_{2-4}$ alkylene units. The positive current collector contains Sn. The bag-shaped separator includes a rib protruding toward the positive electrode plate, and houses the positive electrode plate.

In the lead-acid battery according to the claimed and non-claimed embodiment, the negative electrode material contains a polymer compound as described above, and a positive electrode plate including a positive current collector containing Sn is housed in a bag-shaped separator including a rib protruding toward the positive electrode plate. Such a configuration enables excellent life performance to be secured in both a deep discharge cycle test and a high temperature cycle test.

The reason why in the lead-acid batteries according to the present invention, excellent life performance can be secured in both the deep discharge cycle test and the high temperature cycle test may be as follows.

In the lead-acid battery, a large amount of sulfate ions are released from the electrode plate during charge, and convection occurs due to a concentration difference a portion of an electrolyte solution which has a low concentration of sulfate ions, so that the concentration difference is reduced. If the negative electrode material contains a polymer compound, charge acceptability is deteriorated, so that it is difficult to reduce the difference in concentration of sulfate ions. In a portion of the separator which is in contact with the positive electrode plate, the separator may be provided with a rib protruding toward the positive electrode plate because oxidative degradation of the separator is significant. The electrolyte solution is convected in a space formed between the positive electrode plate and the separator by the rib. Thus, when the bag-shaped separator houses the negative electrode plate, the electrolyte solution having a high sulfate ion concentration easily settles to the bottom of a container further below the electrode plate by passing through a space between the separator and the positive electrode plate. On the other hand, in the lead-acid battery according to the invention, the positive electrode plate is housed in the bag-shaped separator. Thus, even if an electrolyte solution having a high sulfate ion concentration settles by passing through a space between the positive electrode plate and the separator, the electrolyte solution is prevented from settling further downward by the bottom of the bag-shaped separator. Even though a difference in concentration of sulfate ions is generated, the concentration difference is easily reduced by convection because a large number of sulfate ions are present in the vicinity of the electrode plate. Therefore, in a deep discharge cycle test, stratification is reduced, so that excellent life performance can be secured.

In a high temperature cycle test, generally, elongation of the positive electrode plate due to corrosion of the positive current collector is significant. In the lead-acid batteries according to the claimed and non-claimed embodiment, corrosion of the positive current collector is reduced by the action of Sn precipitated at the crystal grain boundary of lead because the positive current collector contains Sn. Since the negative electrode material contains a polymer compound, the hydrogen overvoltage in the negative electrode plate increases, so that the charge current value can be reduced when constant voltage charge is performed. Thus, even the corrosion of the positive current collector hardly proceeds. Further, when the polymer compound eluted from the negative electrode plate is attached to the separator, the polymer compound acts as an antioxidant to reduce oxidative degradation of the separator, so that the separator is hardly damaged. It is considered that consequently, corrosion of the positive current collector is synergistically reduced, and oxidative degradation of the separator is reduced, so that life performance in a high temperature cycle test can be synergistically improved.

From the viewpoint of enhancing the effect of suppressing corrosion of the positive current collector and further improving life performance in a high temperature cycle test, the content of Sn in the positive current collector is preferably 0.5 mass% or more.

The content of Sn in the positive current collector is less than 3 mass%. When the content of Sn is in the above-mentioned range, the influence of elongation due to corrosion of the positive current collector is likely to be apparent. However, a configuration in which the negative electrode material contains a polymer compound enables high life performance to be secured in a high temperature cycle test although the positive electrode plate including a positive current collector having a Sn content of less than 3 mass% is housed in the bag-shaped separator.

The hydrogen overvoltage increasing effect of the polymer compound is exhibited by covering the surface of lead with the polymer compound. Thus, it is important that the polymer compound is present in the vicinity of the lead in the negative electrode material, whereby the effect of the polymer compound can be effectively exhibited. Thus, it is important that the negative electrode material contains the polymer compound regardless of whether or not a component of the lead-acid battery other than the negative electrode material contains the polymer compound.

In the lead-acid battery of the non-claimed embodiment, the polymer compound may contain an oxygen atom bonded to a terminal group and a $-CH_2-$ group and/or a $-CH<$ group bonded to the oxygen atom. In the $^1$H-NMR spectrum, a ratio of an integrated value of the peak of 3.2 ppm to 3.8 ppm to the sum of the integrated value of the peak of 3.2 ppm to 3.8 ppm, an integrated value of a peak of hydrogen atoms of the $-CH_2-$ group bonded to the oxygen atom, and an integrated value of a peak of a hydrogen atom of the $-CH<$ group bonded to the oxygen atom is preferably 85% or more. Such polymer compounds contain many oxy $C_{2-4}$ alkylene units in the molecule. Therefore, it is considered that the polymer compound easily adsorbs to lead and is likely to have a linear structure, so that it becomes easy to thinly cover the lead surface. Thus, it is possible to increase the hydrogen overvoltage and suppress deterioration of charge acceptability, so that life performance in a deep discharge cycle test and a high temperature cycle test can be further improved.

In the $^1$H-NMR spectrum, the polymer compound having a peak in the chemical shift range of 3.2 ppm to 3.8 ppm preferably has a repeating structure of oxy $C_{2-4}$ alkylene units. When the polymer compound containing a repeating structure of oxy $C_{2-4}$ alkylene units is used, it is considered that the polymer compound becomes easier to adsorb to lead, and it becomes easy to thinly cover the lead surface by easily taking a linear structure. Thus, it is possible to increase the hydrogen overvoltage and suppress deterioration of charge acceptability, so that life performance in a deep discharge cycle test and a high temperature cycle test can be further improved.

In the lead-acid battery of both the claimed and non-claimed embodiment, the polymer compound may contain at least one selected from the group consisting of a hydroxy compound having a repeating structure of oxy $C_{2-4}$ alkylene units, an etherified product of the hydroxy compound, and an esterified product of the hydroxy compound. Here, the hydroxy compound is at least one selected from the group consisting of poly $C_{2-4}$ alkylene glycols, copolymers having a repeating structure of oxy $C_{2-4}$ alkylene, and poly $C_{2-4}$ alkylene oxide adducts of a polyol. When such a polymer compound is used, the effect of increasing the hydrogen overvoltage is further enhanced, and deterioration of charge acceptability can be suppressed, so that it is possible to secure higher life performance in a deep discharge cycle test and a high temperature cycle test.

The polymer compound may have a repeating structure of oxypropylene units ($-O-CH(-CH_3)-CH_2-$). For such a polymer compound, charge acceptability tends to be lower as compared to a polymer compound having a repeating structure of oxyethylene units ($-O-CH_2-CH_2-$), but since the positive current collector contains Sn and the positive electrode plate is housed in a bag-shaped separator, it is possible to secure high life performance in a deep discharge cycle test and a high temperature cycle test.

The polymer compound may have one or more hydrophobic groups, and at least one of the hydrophobic groups may be a long-chain aliphatic hydrocarbon group having 8 or more carbon atoms. The action of such a hydrophobic group suppresses excessive covering of the lead surface with the polymer compound, so that it is possible to further enhance the effect of suppressing deterioration of charge acceptability. It is preferable that the polymer compound has a repeating structure of oxyethylene units. When the polymer compound has a repeating structure of oxyethylene units having high hydrophilicity, the polymer compound can be selectively adsorbed to lead. Due to the balance between hydrophobic groups and hydrophilic groups, it is possible to increase the hydrogen overvoltage and suppress deterioration of charge acceptability, so that life performance in a deep discharge cycle test and a high temperature cycle test can be further improved.

The HLB of the polymer compound is preferably 4 or more and 9 or less. In this case, due to the balance between hydrophobicity and hydrophilicity, it is possible to increase the hydrogen overvoltage and suppress deterioration of charge acceptability, so that life performance in a deep discharge cycle test and a high temperature cycle test can be further improved.

As described above, the polymer compound can thinly cover the lead surface while having high adsorptivity to lead, and therefore even if the content of the polymer compound in the negative electrode material is small, the hydrogen overvoltage can be increased, and deterioration of the charge acceptability can be suppressed. From the viewpoint of further enhancing the effect of suppressing deterioration of charge acceptability, and securing higher life performance in a deep discharge cycle test, the content of the polymer compound in the negative electrode material is preferably 550 ppm or less on a mass basis. From the viewpoint of enhancing the effect of increasing the hydrogen overvoltage, and securing higher life performance in a high temperature cycle test, the content of the polymer compound in the negative electrode material is preferably 5 ppm or more.

In the lead-acid battery, it is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution and a separator) of the lead-acid battery when preparing the lead-acid battery. The polymer compound may be contained in one constituent element, or may be contained in two or more constituent elements (for example, a negative electrode plate and an electrolyte solution).

The lead-acid battery may be either a valve regulated (sealed) lead-acid battery (VRLA type lead-acid battery) or a flooded-type (vented type) lead-acid battery.

In the present specification, the content of the polymer compound in the negative electrode material and the content of Sn in the positive current collector are determined for the negative electrode plate or the positive electrode plate taken out from a lead-acid battery in a fully charged state.

(Description of terminology)

(Electrode material)

The negative electrode material and a positive electrode material are each usually held by the current collector. The electrode material is a portion of the electrode plate which excludes the current collector. A member such as a mat or a pasting paper may be stuck to the electrode plate. Such a member (also referred to as a sticking member) is used integrally with the electrode plate and is thus included in the electrode plate. When the electrode plate includes the sticking member (such as a mat or a pasting paper), the electrode material is a portion of the electrode plate which excludes the current collector and the sticking member from the electrode plate.

(Polymer compound)

The polymer compound satisfies at least one of the following conditions (i) and (ii).

Condition (i)

The polymer compound has a peak in a range of 3.2 ppm or more and 3.8 ppm or less in a chemical shift of a $^1$H-NMR spectrum measured using deuterated chloroform as a solvent.

Condition (ii)

The polymer compound has a repeating structure of oxy $C_{2-4}$ alkylene units.
In the condition (i), the peak appearing in the range of 3.2 ppm or more and 3.8 ppm or less is derived from the oxy $C_{2-4}$ alkylene unit. That is, the polymer compound satisfying the condition (ii) is also the polymer compound satisfying the condition (i). The polymer compound satisfying the condition (i) may have a repeating structure of monomer units other than the oxy $C_{2-4}$ alkylene unit, and may have a certain level of molecular weight. The number average molecular weight (Mn) of the polymer compound satisfying the above condition (i) or (ii) may be, for example, 300 or more.

(Oxy $C_{2-4}$ alkylene unit)

Note that the oxy $C_{2-4}$ alkylene unit is a unit represented by $-O-R^1-$ ($R^1$ represents a $C_{2-4}$ alkylene group.).

(HLB)

HLB stands for Hydrophile Lipophile Balance, and is a numerical value representing the balance between hydrophobicity and hydrophilicity of a surfactant (predominantly a nonionic surfactant). The HLB value of the polymer compound (P) is determined by a Griffin method.

(Number average molecular weight)

In the present description, the number average molecular weight (Mn) is determined by gel permeation chromatography (GPC). A standard substance used for determining Mn is polyethylene glycol.

(Fully charged state)

The fully charged state of the flooded-type lead-acid battery is defined by the definition of JIS D 5301: 2019. More specifically, the following state is defined as the fully charged state: the lead-acid battery is charged in a water bath at 25°C $\pm$ 2°C at a current (A) 0.2 times as large as a numerical value (numerical value whose unit is Ah) described as a rated capacity until a terminal voltage (V) during charge measured every fifteen minutes or an electrolyte solution density subjected to temperature correction to 20°C exhibits a constant value at three significant digits continuously three times. In the case of a valve regulated lead-acid battery, the fully charged state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C $\pm$ 2°C, and the charge is completed when the charge current during constant voltage charge becomes a value (A) of 0.005 times as large as the numerical value (numerical value whose unit is Ah) described in the rated capacity.
The lead-acid battery in the full charge state refers to a lead-acid battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

(Up-down direction of lead-acid battery or components of lead-acid battery)

In the present specification, the up-down direction of the lead-acid battery or components (such as electrode plate, container, and separator) of the lead-acid battery means the up-down direction of the lead-acid battery in the vertical direction when the lead-acid battery is in use. Each of the positive electrode plate and the negative electrode plate includes a lug for connecting to an external terminal. In a horizontal valve regulated lead-acid battery or the like, the lug may be provided at a side portion of the electrode plate so as to protrude laterally; however, in many lead-acid batteries, the lug is usually provided at an upper portion of the electrode plate so as to protrude upward.

Hereinafter, the lead-acid battery according to an embodiment of the present invention will be described for each of the main constituent elements, but the present invention is not limited to the following embodiment.

[Lead-acid battery]

(Negative electrode plate)

The negative electrode plate usually includes a negative current collector in addition to a negative electrode material.

(Negative current collector)

The negative current collector may be formed by casting lead (Pb) or a lead alloy, or may be formed by processing a lead sheet or a lead alloy sheet. Examples of the processing method include expanding processing or punching processing. It is preferable to use the grid-like current collector as the negative current collector because the negative electrode material is easy to be supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug part may contain Sn or a Sn alloy.

(Negative electrode material)

The negative electrode material contains the above polymer compound. The negative electrode material further contains a negative active material (specifically, lead or lead sulfate) that exhibits a capacity through a redox reaction. The negative electrode material may contain at least one selected from the group consisting of an organic expander, a carbonaceous material, and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has a peak in a range of 3.2 ppm or more and 3.8 ppm or less in a chemical shift of $^1$H-NMR spectrum. Such polymer compounds have oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one type or two or more types of such oxy $C_{2-4}$ alkylene units.

The polymer compound preferably has a repeating structure of oxy $C_{2-4}$ alkylene units. The repeating structure may contain one type of oxy $C_{2-4}$ alkylene unit, or may contain two or more kinds of oxy $C_{2-4}$ alkylene units. The polymer compound may contain one type of the repeating structure or two or more kinds of repeating structures.

The polymer compound having a repeating structure of oxy $C_{2-4}$ alkylene units also includes polymer compounds classified as a surfactant (more specifically, a nonionic surfactant).

Examples of the polymer compound include hydroxy compounds having a repeating structure of oxy $C_{2-4}$ alkylene units (poly $C_{2-4}$ alkylene glycols, copolymers having a repeating structure of oxy $C_{2-4}$ alkylene, poly $C_{2-4}$ alkylene oxide adducts of a polyol, and the like), etherified or esterified products of these hydroxy compounds, and the like.

Examples of the copolymer include copolymers containing different oxy $C_{2-4}$ alkylene units. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane and polyhydroxynorbornane), and the like are preferable, and among them, aliphatic polyols are preferable. Examples of the aliphatic polyol include aliphatic diols and polyols of triol or higher (for example, glycerin, trimethylolpropane, pentaerythritol, sugar or sugar alcohol), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar or sugar alcohol include sucrose, erythritol, xylitol, mannitol and sorbitol. The sugar or sugar alcohol may have either a chain structure or a cyclic structure. In the polyalkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group). Among terminals of the polymer compound, some terminals may be etherified, or all terminals may be etherified. For example, one terminal of a main chain of the linear polymer compound may be an -OH group, and the other terminal may be an $-OR^2$ group.

The esterified product has an $-O-C(=O)-R^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^3$ is an organic group). Among terminals of the polymer compound, some terminals may be esterified, or all terminals may be esterified. For example, one terminal of a main chain of the linear polymer compound may be an -OH group, and the other terminal may be an $-O-C(=O)-R^3$ group.

Examples of each of the organic groups $R^2$ and $R^3$ include a hydrocarbon group. The hydrocarbon group may have a substituent (for example, a hydroxy group, an alkoxy group, and/or a carboxy group). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, or an alkynyl group) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, and a naphthyl group. Examples of the bisaryl group include monovalent groups corresponding to bisarene. Examples of the bisarene include biphenyl and bisarylalkanes (for example, bis $C_{6-10}$ aryl $C_{1-4}$ alkanes (such as 2,2-bisphenylpropane)).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group and cyclooctenyl group), and the like. The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, and a trienyl group having three carbon-carbon double bonds. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more for a trienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-nonyl, n-decyl, i-decyl, undecyl, lauryl (dodecyl), tridecyl, myristyl, pentadecyl, cetyl, heptadecyl, stearyl, icosyl, henicosyl, and behenyl.

Specific examples of the alkenyl group include vinyl, 1-propenyl, allyl, cis-9-heptadecene-1-yl, palmitoleyl, and oleyl. An alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

It is preferable that among the polymer compounds, at least one selected from the group consisting of an etherified product of a hydroxy compound having a repeating structure of oxy $C_{2-4}$ alkylene units and an esterified product of a hydroxy compound having a repeating structure of oxy $C_{2-4}$ alkylene units is used because deterioration of charge acceptability can be further suppressed, and life performance in a high temperature cycle test can be further enhanced. The effect of increasing the hydrogen overvoltage can also be secured when these polymers are used. Among the above-mentioned polymer compounds, polymer compounds having a repeating structure of oxypropylene units, polymer compounds having a repeating structure of oxyethylene units, and the like are preferable.

The polymer compound may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include aliphatic hydrocarbon groups having 8 or more carbon atoms among the above-described aliphatic hydrocarbon groups (such as alkyl groups and alkenyl groups). The number of carbon atoms in the aliphatic hydrocarbon group is preferably 12 or more, more preferably 16 or more. Among them, the polymer compound having a long-chain aliphatic hydrocarbon group is preferable because it hardly causes excessive adsorption to lead and the effect of suppressing the deterioration of the charge acceptability is further enhanced. The polymer compound may be a polymer compound in which at least one of the hydrophobic groups is a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds, a polymer compound having a hydrophilic group and a hydrophobic group corresponds to a nonionic surfactant. The repeating structure of oxyethylene units exhibits high hydrophilicity and can be a hydrophilic group in the nonionic surfactant. Thus, the polymer compound having a hydrophobic group preferably has a repeating structure of oxyethylene units. Such a polymer compound adsorbs selectively to lead due to the balance between hydrophobicity and high hydrophilicity from a repeating structure of oxyethylene units, and can be inhibited from excessively covering the surface of lead, so that the hydrogen overvoltage can be increased, and the effect of suppressing deterioration of charge acceptability can be further enhanced. The polymer compound as described above can ensure high adsorptivity to lead even with a relatively low molecular weight (for example, Mn is 1000 or less.).

Among the polymer compounds, a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

In a polyoxypropylene-polyoxyethylene block copolymer or the like, the repeating structure of oxyethylene units corresponds to a hydrophilic group, and the repeating structure of oxypropylene units corresponds to a hydrophobic group. Such a copolymer is also encompassed by the polymer compound having a hydrophobic group.

Examples of the polymer compound having a hydrophobic group and having a repeating structure of oxyethylene units include etherified products of polyethylene glycol (such as alkyl ether), esterified products of polyethylene glycol (such as carboxylic acid ester), etherified products (such as alkyl ether) of a polyethylene oxide adduct of the polyol, esterified products of a polyethylene oxide adduct (such as carboxylic acid ester) of the polyol (such as polyols of triol or higher), and the like. Specific examples of the polymer compound as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether, but are not limited thereto. Among them, use of an esterified product of polyethylene glycol, an esterified product of a polyethylene oxide adduct of the polyol, and the like is preferable because higher charge acceptability can be secured and an effect of increasing the hydrogen overvoltage can be obtained.

Among the polymer compounds, a polymer compound classified as a surfactant has an HLB of preferably 4 or more, more preferably 4.3 or more from the viewpoint of enhancing the effect of increasing the hydrogen overvoltage and easily securing higher life performance in a high temperature cycle test. From the viewpoint of easily securing higher charge acceptability, and easily securing a higher life in a deep discharge cycle test, the HLB of the polymer compound is preferably 18 or less, more preferably 10 or less or 9 or less, still more preferably 8.5 or less.

The HLB of the polymer compound may be 4 or more (or 4.3 or more) and 18 or less, or 4 or more (or 4.3 or more) and 10 or less. From the viewpoint of achieving an excellent balance between life performance in a high temperature cycle life test and life performance in a deep discharge cycle test, the HLB of the polymer compound is preferably 4 or more (or 4.3 or more) and 9 or less, or 4 or more (or 4.3 or more) and 8.5 or less.

It is also preferable that the repeating structure of the oxy $C_{2-4}$ alkylene includes at least a repeating structure of oxypropylene units. In this case, charge acceptability tends to be lower than that in the case where a repeating structure of oxyethylene units is included, but even in this case, it is possible to secure high life performance in a deep discharge cycle test and a high temperature cycle test. The polymer compound containing the oxypropylene unit has peaks derived from -CH< and $-CH_2-$ of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from $-CH_2-$, and the peak in the range of more than 3.42 ppm and 3.8 ppm or less is derived from -CH< and $-CH_2-$.

Examples of the polymer compound containing at least a repeating structure of oxypropylene units include polypropylene glycol, a copolymer having a repeating structure of oxypropylene units, a polypropylene oxide adduct of the polyol, etherified or esterified products thereof, and the like. Examples of the copolymer include an oxypropylene-oxyalkylene copolymer (provided that oxyalkylene is $C_{2-4}$ alkylene other than oxypropylene) and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, alkyl ether of an oxypropylene-oxyalkylene copolymer (such as alkyl ether of polyoxypropylene-polyoxyethylene copolymer), and the like. Examples of the esterified product include polypropylene glycol ester of carboxylic acid, carboxylic acid ester of an oxypropylene-oxyalkylene copolymer (such as carboxylic acid ester of polyoxypropylene-polyoxyethylene copolymer), and the like.

Examples of the polymer compound having at least a repeating structure of oxypropylene units include polypropylene glycol, polyoxypropylene-polyoxyethylene copolymers (such as polyoxypropylene-polyoxyethylene block copolymers), polypropylene glycol alkyl ethers (alkyl ethers in which $R^2$ is an alkyl having 10 or less (or 8 or less or 6 or less) carbon atoms (such as methyl ether, ethyl ether and butyl ether)), polyoxyethylene-polyoxypropylene alkyl ethers (alkyl ethers in which $R^2$ is an alkyl having 10 or less (or 8 or less or 6 or less) carbon atoms (such as butyl ether and hydroxyhexyl ether)), polypropylene glycol carboxylates (polypropylene glycol carboxylates in which $R^3$ is an alkyl having 10 or less (or 8 or less or 6 or less) carbon atoms (such as polypropylene glycol acetate), and polypropylene oxide adducts of polyols with three or more hydroxyl groups (such as polypropylene oxide adducts of glycerin). However, the polymer compound is not limited thereto.

It is preferable that the polymer compound contains a large amount of oxy $C_{2-4}$ alkylene units from the viewpoint of enhancing adsorptivity of the polymer compound to lead and making it easy for the polymer compound to have a linear structure. Such a polymer compound includes, for example, an oxygen atom bonded to a terminal group and a -$CH_2$- group and/or a -CH< group bonded to the oxygen atom. In the $^1$H-NMR spectrum of the polymer compound, the ratio of the integrated value of the peak of 3.2 ppm to 3.8 ppm to the sum of the integrated value of the peak of 3.2 ppm to 3.8 ppm, the integrated value of the peak for the hydrogen atoms of the - $CH_2$- group and the integrated value of the peak for the hydrogen atom of the -CH< group increases. This ratio is, for example, 50% or more, and may be 80% or more. From the viewpoint of further enhancing the effect of increasing the hydrogen overvoltage and easily securing higher charge acceptability, the above ratio is preferably 85% or more, and more preferably 90% or more. For example, when the polymer compound has an -OH group at a terminal and also has a -$CH_2$- group and/or a -CH< group bonded to an oxygen atom of the -OH group, in the $^1$H-NMR spectrum, the peaks of the hydrogen atoms of the -$CH_2$- group and/or the -CH< group have a chemical shift in a range of more than 3.8 ppm and 4.0 ppm or less.

The negative electrode material may contain one kind or two or more kinds of polymer compounds.

The polymer compound may include, for example a compound having a Mn of 5,000,000 or less, or a compound having a Mn of 1,000,000 or less or 100,000 or less, or a compound having a Mn of 20,000 or less. From the viewpoint of securing higher discharge performance, the polymer compound includes preferably a compound having a Mn of 10,000 or less, and may include a compound having a Mn of 5,000 or less or 3,000 or less, or a compound having a Mn of 2,500 or less or 2,000 or less. From the viewpoint of easily obtaining the effect of increasing the hydrogen overvoltage, the Mn of such a compound may be 300 or more, 400 or more, or 500 or more. As the polymer compound, two or more compounds having different Mn may be used. That is, the polymer compound may have a plurality of peaks of Mn in the distribution of the molecular weight.

The Mn of the compound may be 300 or more and 5,000,000 or less (or 1,000,000 or less), 400 or more and 5,000,000 or less (or 1,000,000 or less), 500 or more and 5,000,000 or less (or 1,000,000 or less), 300 or more and 100,000 or less (or 20,000 or less), 400 or more and 100,000 or less (or 20,000 or less), 500 or more and 100,000 or less (or 20,000 or less), 300 or more and 10,000 or less (or 5,000 or less), 400 or more and 10,000 or less (or 5,000 or less), 500 or more and 10,000 or less (or 5,000 or less), 300 or more and 3,000 or less (or 2,500 or less), 400 or more and 3,000 or less (or 2,500 or less), 500 or more and 3,000 or less (or 2,500 or less), 300 or more (or 400 or more) and 2,000 or less, or 500 or more and 2,000 or less.

The content of the polymer compound in the negative electrode material is, for example, 5 ppm or more and may be 10 ppm or more on a mass basis. From the viewpoint of increasing the hydrogen overvoltage and securing higher life performance in a high temperature cycle test, the content of the polymer compound in the negative electrode material is preferably 20 ppm or more, more preferably 30 ppm or more, and may be 70 ppm or more or 100 ppm or more on a mass basis. The content of the polymer compound in the negative electrode material is, for example, 1,000 ppm or less, may be less than 1,000 ppm, 800 ppm or less or 700 ppm or less, 600 ppm or less on a mass basis. From the viewpoint of enhancing the effect of suppressing deterioration of charge acceptability, and securing higher life performance in a deep discharge cycle test, the content of the polymer compound in the negative electrode material is preferably 550 ppm or less or 500 ppm or less on a mass basis.

The content of the polymer compound in the negative electrode material may be 5 ppm or more (or 10 ppm or more) and 1,000 ppm or less, 5 ppm or more (or 10 ppm or more) and less than 1,000 ppm, 5 ppm or more (or 10 ppm or more) and 800 ppm or less, 5 ppm or more (or 10 ppm or more) and 700 ppm or less, 5 ppm or more (or 10 ppm or more) and 600 ppm or less, 5 ppm or more (or 10 ppm or more) and 550 ppm or less, 5 ppm or more (or 10 ppm or more) and 500 ppm or less, 20 ppm or more (or 30 ppm or more) and 1,000 ppm or less, 20 ppm or more (or 30 ppm or more) and less than 1,000 ppm, 20 ppm or more (or 30 ppm or more) and 800 ppm or less, 20 ppm or more (or 30 ppm or more) and 700 ppm or less, 20 ppm or more (or 30 ppm or more) and 600 ppm or less, 20 ppm or more (or 30 ppm or more) and 550 ppm or less, 20 ppm or more (or 30 ppm or more) and 500 ppm or less, 70 ppm or more (or 100 ppm or more) and 1,000 ppm or less, 70 ppm or more (or 100 ppm or more) and less than 1,000 ppm, 70 ppm or more (or 100 ppm or more) and 800 ppm or less, 70 ppm or more (or 100 ppm or more) and 700 ppm or less, 70 ppm or more (or 100 ppm or more) and 600 ppm or less, 70 ppm or more (or 100 ppm or more) and 550 ppm or less, or 70 ppm or more (or 100 ppm or more) and 500 ppm or less, on a mass basis.

(Organic expander)

The organic expander is an organic compound among compounds having a function of suppressing shrinkage of lead as a negative active material when charge-discharge of the lead-acid battery is repeated. The organic expanders are generally roughly classified into lignin compounds and synthetic organic expanders. It can also be said that the synthetic organic expander is an organic expander other than lignin compounds. Examples of the organic expander contained in the negative electrode material include a lignin compound, a synthetic organic expander, and the like. The negative electrode material may contain one kind or two or more kinds of organic expanders.

Examples of the lignin compounds include lignin, lignin derivatives, and the like. Examples of the lignin derivative include lignin sulfonic acid or salts thereof (such as alkali metal salts (sodium salts and the like)), and the like.

The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt.

At least a lignin compound may be used as the organic expander. Charge acceptability tends to be lower in the case where a lignin compound is used compared to the case where a synthetic organic expander is used. However, since the negative electrode material contains a specific polymer compound, deterioration of charge acceptability is suppressed even when a lignin compound is used as the organic expander.

As the organic expander, the case of using a condensate containing at least a unit of an aromatic compound is also preferable. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring, a naphthalene ring, and the like. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like). Examples of the aromatic compound include compounds having the aromatic ring, and at least one selected from the group consisting of a hydroxy group and an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of an amino group (specifically, salts with anions). Examples of Me include alkali metals (Li, K, Na, and the like), Group 2 metals of the periodic table (Ca, Mg, and the like), and the like.

As the aromatic compound, bisarene compounds [bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like), and the like] are preferable. The aromatic compound may further have a substituent. The organic expander may contain one or more or a plurality of residues of these compounds. As the bisphenol compound, bisphenol A, bisphenol S, bisphenol F, and the like are preferable.

The condensate preferably contains a unit of an aromatic compound having at least a sulfur-containing group. In particular, use of a condensate containing at least a unit of a bisphenol compound having a sulfur-containing group is advantage in securing higher charge acceptability.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group and a sulfonic acid group or a salt thereof.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The content of the organic expander contained in the negative electrode material is, for example, 0.005 mass% or more and may be 0.01 mass% or more. When the content of the organic expander is in such a range, high discharge performance can be secured. The content of the organic expander is, for example, 1.0 mass% or less, and may be 0.5 mass% or less or 0.2 mass% or less.

The content of the organic expander contained in the negative electrode material may be 0.005 mass% or more (or 0.01 mass% or more) and 1.0 mass% or less, 0.005 mass% or more (or 0.01 mass% or more) and 0.5 mass% or less, or 0.005 mass% or more (or 0.01 mass% or more) and 0.2 mass% or less.

(Carbonaceous material)

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphite-type crystal structure and may be either artificial graphite or natural graphite. The negative electrode material may contain one kind or two or more kinds of carbonaceous materials.

The content of the carbonaceous material in the negative electrode material is, for example, 0.05 mass% or more and may be 0.10 mass% or more. The content of the carbonaceous material is, for example, 5 mass% or less and may be 3 mass% or less.

The content of the carbonaceous material in the negative electrode material may be 0.05 mass% or more and 5 mass% or less, 0.05 mass% or more and 3 mass% or less, 0.10 mass% or more and 5 mass% or less, or 0.10 mass% or more and 3 mass% or less.

(Barium sulfate)

The content of barium sulfate in the negative electrode material is, for example, 0.05 mass% or more and may be 0.10 mass% or more. The content of barium sulfate in the negative electrode material is, for example, 3 mass% or less and may be 2 mass% or less.

The content of barium sulfate in the negative electrode material may be 0.05 mass% or more and 3 mass% or less, 0.05 mass% or more and 2 mass% or less, 0.10 mass% or more and 3 mass% or less, or 0.10 mass% or more and 2 mass% or less.

(Analysis of constituent components of negative electrode material)

Hereinafter, a method of analyzing constituent components of the negative electrode material will be described. Prior to measurement or analysis, the lead-acid battery in the fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed by peeling. Next, the negative electrode material is separated from the negative electrode plate to obtain a sample (hereinafter referred to as sample A). The sample A is ground as necessary and subjected to analysis.

(1) Analysis of polymer compound

(1-1) Qualitative analysis of polymer compound

(a) Analysis of oxy $C_{2-4}$ alkylene unit

Ground sample A is used. $150.0 \pm 0.1$ mL of chloroform is added to $100.0 \pm 0.1$ g of the sample A, and the mixture is stirred at $20 \pm 5°C$ for sixteen hours to extract the polymer compound. Thereafter, the solid is removed by filtration. For a chloroform solution in which the polymer compound obtained by the extraction is dissolved or the polymer compound obtained by drying the chloroform solution, for example, information is obtained from at least one selected from an infrared spectroscopic spectrum, an ultraviolet-visible absorption spectrum, an NMR spectrum, and LC-MS and pyrolysis GC-MS to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.

Observation frequency: 395.88 MHz
Pulse width: 6.30 $\mu$s
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the -CH$_2$- group and the -CH< group bonded to the oxygen atom bonded to the terminal group of the polymer compound, the sum ($V_2$) of integrated values of peaks in the $^1$H-NMR spectrum is determined. Then, from $V_1$ and $V_2$, a ratio of $V_1$ to the sum of $V_1$ and $V_2$ ($= V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in a range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(b) Analysis of hydrophobic group in esterified product

When the polymer compound is an esterified product of a hydroxy compound, a predetermined amount of the polymer compound obtained by drying a chloroform solution in which the polymer compound obtained by extraction is dissolved in (a) is taken, and an aqueous potassium hydroxide solution is added. This saponifies the esterified product to generate a fatty acid potassium salt and a hydroxy compound. The aqueous potassium hydroxide solution is added until completion of the saponification. To the resulting mixture, methanol and a solution of boron trifluoride are added, and the mixture is stirred to convert the fatty acid potassium salt into fatty acid methyl ester. The resulting mixture is analyzed by pyrolysis GC-MS under the following conditions to identify a hydrophobic group contained in the esterified product.

Analyzer: high-performance general-purpose gas chromatogram GC-2014 manufactured by Shimadzu Corporation
Column: DEGS (diethylene glycol succinic acid ester) 2.1 m
Oven temperature: 180 to 120°C
Inlet temperature: 240°C
Detector temperature: 240°C
Carrier gas: He (flow rate: 50 mL/min)
Injection amount: 1 $\mu$L to 2 $\mu$L

(c) Analysis of hydrophobic group in etherified product

When the polymer compound is an etherified product of a hydroxy compound, a predetermined amount of the polymer compound obtained by drying a chloroform solution in which the polymer compound obtained by extraction is dissolved in (a) is taken, and hydrogen iodide is added. This generates an iodide ($R^3I$) corresponding to the organic group of the ether moiety of the polymer compound ($R^3$ described above), and also produces a diiodo $C_{2-4}$ alkane corresponding to the oxy $C_{2-4}$ alkylene unit. The hydrogen iodide is added in an amount sufficient to complete conversion of the etherified to the iodide and the diiodo $C_{2-4}$ alkane. The resulting mixture is analyzed by pyrolysis GC-MS under the same conditions as in (b) to identify a hydrophobic group present in the esterified product.

(1-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1{,}000{,}000$$

wherein $M_a$ is a molecular weight of a structure showing a peak in a chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.

Since the reference substance in this analysis is TCE, $N_r$ = 2 and $M_r$ = 168. In addition, m = 100.

For example, when the polymer compound is polypropylene glycol, $M_a$ is 58, and $N_a$ is 3. When the polymer compound is polyethylene glycol, $M_a$ is 44, and $N_a$ is 4. In the case of a copolymer, $N_a$ and $M_a$ are values obtained by averaging $N_a$ values and $M_a$ values, respectively, of each monomer unit using a molar ratio (mol%) of each monomer unit contained in the repeating structure.

In the quantitative analysis, the integrated value of the peak in the $^1$H-NMR spectrum is determined using data processing software "ALICE" manufactured by JEOL Ltd.

(1-3) Measurement of Mn of polymer compound

Using the chloroform soluble component, GPC measurement of the polymer compound is performed under the following conditions using the following apparatuses. Separately, a calibration curve (standard curve) is prepared from a plot of Mn of the standard substance and elution time. The Mn of the polymer compound is calculated based on the standard curve and the GPC measurement result of the polymer compound. However, the esterified product, the etherified product, and the like may be decomposed in the chloroform soluble component.

Analysis system: 20A system (manufactured by Shimadzu Corporation)
Column: two columns of GPC KF-805L (manufactured by Shodex) connected in series
Temperature: 30°C $\pm$ 1°C
Mobile phase: tetrahydrofuran
Flow rate: 1 mL/min.
Concentration: 0.20 mass%
Injection amount: 10 $\mu$L
Standard substance: polyethylene glycol (Mn = 2,000,000, 200,000, 20,000, 2,000, 200)
Detector: differential refractive index detector (Shodex RI-201H, manufactured by Shodex)

(2) Analysis of organic expander

(2-1) Qualitative analysis of organic expander in negative electrode material

The pulverized sample A is immersed in a 1 mol/L sodium hydroxide aqueous solution to extract the organic expander. Next, insoluble components are removed from the extract by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is specified using a combination of information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, pyrolysis GC-MS capable of obtaining information on individual compounds constituting a substance, and the like.

(2-2) Quantitative determination of content of organic expander in negative electrode material

As in (2-1), a solution after removal of the insoluble component by filtration is obtained for the separated material containing an organic expander. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using a separately available organic polymer in which the ultraviolet-visible absorption spectrum, the infrared spectroscopic spectrum, the NMR spectrum, and the like exhibit similar shapes with respect to the organic expander extracted from the negative electrode of the battery.

(3) Quantitative determination of carbonaceous material and barium sulfate

To 10 g of the ground sample A, 50 ml of nitric acid having a concentration of 20 mass% is added and heated for about twenty minutes to dissolve the lead component as lead ions. The resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at $110°C \pm 5°C$. The filtered sample is a mixed sample of the carbonaceous material and barium sulfate. The mass of the membrane filter is subtracted from the total mass of the mixed sample (hereinafter, referred to as sample C) and the membrane filter after drying to measure the mass of sample C ($M_m$). Thereafter, sample C is placed in a crucible together with a membrane filter and is burned and incinerated at 1,300°C or higher. The residue remaining is barium oxide. The mass of barium sulfate ($M_B$) is determined by converting the mass of barium oxide to the mass of barium sulfate. The mass of the carbonaceous material is calculated by subtracting the mass $M_B$ from the mass $M_m$.

(Others)

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the polymer compound, and if necessary, at least one selected from the group consisting of an organic expander, a carbonaceous material, and other additives, and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

As the positive electrode plate of the lead-acid battery, a paste-type positive electrode plate is used. The paste-type positive electrode plate includes a positive current collector and a positive electrode material.

The positive electrode material contained in the positive electrode plate contains a positive active material (lead dioxide or lead sulfate) that exhibits a capacity through a redox reaction. The positive electrode material may optionally contain another additive.

The positive current collector may be formed by casting lead alloy containing Sn, or may be formed by processing a lead alloy sheet containing Sn. Examples of the processing method include expanding processing and punching processing. It is preferable to use a grid-shaped current collector as the positive electrode current collector because the positive electrode material is easy to be supported.

The content of Sn in the positive current collector is preferably less than 3 mass%, more preferably 2.5 mass% or less, and may be 1.8 mass% or less, or 1.6 mass% or less. When the Sn content is in such a range, the amount of elongation associated with corrosion of the positive current collector tends to increase, but even in this case, it is possible to secure excellent life performance in a high temperature cycle test. There is also the advantage of being low in cost. From the viewpoint of securing higher life performance in a high temperature cycle test, the content of Sn in the positive current collector is preferably 0.5 mass% or more, more preferably 0.7 mass% or more, or 0.8 mass% or more.

The content of Sn in the negative current collector may be 0.5 mass% or more and less than 3 mass% (or 2.5 mass% or less), 0.7 mass% or more and less than 3 mass% (or 2.5 mass% or less), 0.8 mass% or more and less than 3 mass% (or 2.5 mass% or less), 0.5 mass% or more and 1.8 mass% or less (or 1.6 mass% or less), 0.7 mass% or more and 1.8 mass% or less (or 1.6 mass% or less), or 0.8 mass% or more and 1.8 mass% or less (or 1.6 mass% or less).

The lead alloy used for the positive current collector may be a Pb-Sn-based alloy, a Pb-Ca-Sn-based alloy, or the like. The lead alloy may further contain, as an additive element, at least one selected from the group consisting of Ba, Ag, Al, Bi, As, Se, Cu, and the like.

The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector.

A non-formed paste-type positive electrode plate is obtained by filling a positive current collector with a positive electrode paste, and curing and drying the paste. The positive electrode paste is prepared by mixing lead powder, an additive, water, and sulfuric acid. Thereafter, the positive electrode plate is obtained by forming the non-formed positive electrode plate.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Quantitative analysis of Sn in positive current collector)

Prior to quantitative analysis of Sn, a positive current collector is obtained by removing the positive electrode material from the positive electrode plate taken out from the lead-acid battery, and a part of the positive current collector is collected to provide a sample for analysis. More specifically, vibration is applied to the positive electrode plate, so that the positive electrode material falls off from the positive current collector. The positive electrode material remaining around the positive current collector is then removed using a ceramic knife, and a part of a portion of the positive current collector which has metallic luster is collected as a sample. The mass of the collected sample is measured, and the sample is then mixed with tartaric acid and dilute nitric acid to obtain an aqueous solution. Hydrochloric acid is added to the aqueous solution to precipitate lead chloride, and the filtrate was collected by filtration. Using the filtrate, the content of Sn in the positive current collector is determined by the following procedure.

Quantification of Sn contained in the positive current collector can be analyzed in accordance with lead separation inductively coupled plasma atomic emission spectroscopy described in JIS H 2105: 1955. More specifically, the concentration of Sn in the filtrate is analyzed by a calibration curve method using an ICP emission spectrophotometer, and the content of Sn in the positive current collector is determined from the concentration of Sn and the mass of the collected sample. As the ICP emission spectrophotometer, ICPS-8000 manufactured by Shimadzu Corporation is used.

(Bag-shaped separator)

The bag-shaped separator is configured to house a positive electrode plate. The positive electrode plate housed in the bag-shaped separator and the negative electrode plate are superposed to obtain a state in which the separator is interposed between positive electrode plate and the negative electrode plate. As the separator, a nonwoven fabric may be used, and it is preferable to use at least a microporous film.

The nonwoven fabric is a mat in which fibers are intertwined without being woven, and the nonwoven fabric is mainly composed of fibers. In the nonwoven fabric, for example, 60 mass% or more of the nonwoven fabric is formed of fibers. Examples of the fibers include glass fibers, polymer fibers (polyolefin fiber, acrylic fiber, polyester fiber (polyethylene terephthalate fiber, or the like), and the like), and pulp fibers. The nonwoven fabric may include components such as acid-resistant inorganic powder and a polymer as a binder, in addition to fibers.

The microporous film is a porous sheet (or film) mainly composed of components other than fiber components. The microporous film is preferably formed of a material having acid resistance, and is preferably a microporous film composed mainly of a polymer component. The microporous film may contain a filler. The polymer component is preferably a polyolefin (polyethylene, polypropylene or the like) from the viewpoint of being inexpensive and excellent in acid resistance. When the separator contains a polyolefin, oxidative degradation is likely to occur. However, the polymer compound eluted from the negative electrode material is attached to the separator and acts as an antioxidant, and therefore even if a separator containing polyolefin is used, oxidative degradation is suppressed, so that it is possible to secure high life performance in a high temperature cycle test.

The separator may be formed only of a microporous film. The separator may be a laminate of a nonwoven fabric and a microporous film as necessary.

The bag-shaped separator includes at least a rib protruding toward the positive electrode plate. The electrolyte solution having a high sulfate ion concentration easily settles through the space formed between the bag-shaped separator and the positive electrode plate by such a rib, but by housing positive electrode plate in the bag-shaped separator, the electrolyte solution is prevented from settling to below the bottom of the separator, so that stratification is reduced.

More specifically, the bag-shaped separator includes a base portion having a first surface on the positive electrode plate side and a second surface on the negative electrode plate side, and a rib (first rib) protruding from the first surface toward the positive electrode plate. The bag-shaped separator typically includes a plurality of first ribs on the first surface.

The average thickness of the base portion is, for example, 0.1 mm or more, preferably 0.15 mm or more. It is more advantageous that the average thickness of the base portion is in the above-mentioned range from the viewpoint of increasing the strength of the separator to reduce damage to the separator. From the viewpoint of easily securing a higher capacity, the average thickness of the base portion is, for example, 0.3 mm or less.

The average height of the first rib is, for example, 0.3 mm or more, preferably 0.4 mm or more. When the average height of the first rib is in the above-mentioned range, the electrolyte solution having a high sulfate ion concentration easily settles through the space formed between the separator and the positive electrode plate by the first rib. However, even in this case, stratification can be effectively reduced by housing the positive electrode plate in the separator, so that it is possible to secure high life performance in a high temperature cycle test. In addition, oxidative degradation of the separator can be suppressed. From the viewpoint of securing a high capacity, the average height of the first rib is, for example, 1.0 mm or less, and may be 0.7 mm or less. In the bag-shaped separator, it is preferable that the first rib with the above-mentioned average height are formed in at least a region facing the positive electrode plate (preferably, a region where the positive electrode material exists).

The average height of the first rib may be 0.3 mm or more (or 0.4 mm or more) and 1.0 mm or less, or 0.3 mm or more (or 0.4 mm or more) and 0.7 mm or less.

The bag-shaped separator may include a rib (second rib) protruding from the second surface toward the negative electrode plate. However, if a space is formed between the negative electrode plate and the separator by the second rib, the electrolyte solution having a high sulfate ion concentration easily settles to the bottom of the container by passing through the space. Therefore, the average height of the second rib is preferably lower than the average height of the first rib, and it is more preferable that the bag-shaped separator has no second rib. The average height of the second rib is, for example, 0.3 mm or less, and may be 0.1 mm or less.

The average thickness of the base portion and the average height of the rib are determined for a separator taken out from a lead-acid battery in a fully charged state, washed, and dried under a pressure lower than atmospheric pressure.

The average thickness of the base portion is determined by measuring and averaging the thicknesses of the base portion at five arbitrarily selected points in the cross-sectional photograph of the separator.

The average height of the first rib is obtained by averaging the heights of the first rib measured at arbitrarily selected 10 points of the first rib on a first surface of the base part. The height of the first rib refers to a distance from the first surface of the base portion to the top of the first rib at a predetermined position of the first rib. When the surface of the base part is not a flat surface, a distance from a highest position of the first surface of the base part to a top part of the first rib at a predetermined position of the first rib when the separator is placed flat with the first rib side facing upward is defined as a height of the first rib.

The average height of the second rib is determined in a manner similar to that for the first rib. The height of the second rib refers to a distance from a second surface of a base portion to the top of the second rib at a predetermined position of the second rib as in the case of the first rib.

The separator is obtained by, for example, extrusion-molding a resin composition containing a pore-forming additive, a polymer component and the like into a sheet shape, then removing the pore-forming additive to form pores in a matrix of the polymer component, folding the sheet, and pressure-bonding the end portions to form a bag shape. The rib may be formed, for example, at the time of extrusion molding, or may be formed by pressing with a roller having a groove corresponding to the rib after molding into a sheet shape or after removing a pore-forming additive. When a filler is used, for example, the filler is added to the resin composition. Examples of the pore-forming additive include at least one selected from the group consisting of a polymer powder and oil.

(Electrolyte solution)

The electrolyte solution is an aqueous solution containing sulfuric acid and may be gelled as necessary.

The polymer compound may be contained in the electrolyte solution.

The electrolyte solution may contain cations (for example, metal cations) and/or anions (for example, anions other than sulfate anions (such as phosphate ions)) if necessary. Examples of the metal cation include at least one selected from the group consisting of a Na ion, a Li ion, a Mg ion, and an Al ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

(Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of electrode plates in the element may be one or two or more. When in the case where the element includes two or more negative electrode plates, the condition that the polymer compound is contained (condition a) is satisfied in at least one negative electrode plate, an effect of improving charge acceptability is obtained and an effect of increasing the hydrogen overvoltage is obtained as a function of the number of the negative electrode plates satisfying the condition. From the viewpoint of further suppressing deterioration of charge acceptability and easily obtaining an effect of increasing the hydrogen overvoltage, it is preferable that 50% or more (more preferably 80% or more or 90% or more) of the number of negative electrode plates in the element are negative electrode plates satisfying the condition a. The proportion of the negative electrode plates satisfying the condition a in the negative electrode plates in the element is 100% or less. All negative electrode plates in the element may be negative electrode plates satisfying the condition a.

When the element includes two or more positive electrode plates, it is preferable that 50% or more (more preferably 80% or more or 90% or more) of the number of positive electrode plates in the element are positive electrode plates satisfying the condition that the positive electrode plate includes a positive current collector containing Sn and is housed in a bag-shaped separator including the first rib (condition b), from the viewpoint of reducing elongation of the positive current collector to secure higher life performance in a high temperature cycle test. The proportion of the positive electrode plates satisfying the condition b in the positive electrode plates in the element is 100% or less. All positive electrode plates in the element may be positive electrode plates satisfying the condition b.

When the lead-acid battery has two or more cells, the elements of at least some cells may be elements including a negative electrode plate satisfying the condition a and a positive electrode plate satisfying the condition b. From the viewpoint of further suppressing deterioration of charge acceptability and easily obtaining an effect of increasing the hydrogen overvoltage, it is preferable that 50% or more (more preferably 80% or more or 90% or more) of the number of cells in the lead-acid battery include an element including a negative electrode plate satisfying the condition a and a positive electrode plate satisfying the condition b. The proportion of the cells including an element including a negative electrode plate satisfying the condition a and a positive electrode plate satisfying the condition b in the cells in the lead-acid battery is 100% or less. It is preferable that all elements in the lead-acid battery are elements including a negative electrode plate satisfying the condition a and a positive electrode plate satisfying the condition b.

Fig. 1 shows an appearance of an example of a lead-acid battery according to an embodiment of the present invention. A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a positive electrode terminal 16 and a negative electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is formed by alternately laminating each of a plurality of negative electrode plates 3 and each of a plurality of positive electrode plates 2 with a separator 4 interposed therebetween. The separator 4 has a bag shape, with one positive electrode plate 2 packaged in one separator 4. In the cell chamber 14 located at one end of the container 12, a positive electrode shelf portion 6 connecting lug portions 2a of a plurality of positive electrode plates 2 in parallel is connected to a penetrating connection body 8, and a negative electrode shelf portion 5 connecting lug portions 3a of a plurality of negative electrode plates 3 in parallel is connected to a negative pole 7. The negative pole 7 is connected to the negative electrode terminal 17 outside the lid 15. In the cell chamber 14 located at the other end of the container 12, a positive pole 9 is connected to the positive electrode shelf portion 6, and the penetrating connection body 8 is connected to the negative electrode shelf portion 5. The positive pole 9 is connected to the positive electrode terminal 16 outside the lid 15. Each penetrating connection body 8 passes through a through-hole made in the partition 13 to connect the elements 11 of the adjacent cell chambers 14 in series.

The positive electrode shelf portion 6 is formed by welding the lug portions 2a, provided on the upper parts of the respective positive electrode plates 2, to each other by a cast-on-strap method or a burning method. The negative electrode shelf portion 5 is also formed by welding the lug portions 3a, provided on the upper parts of the respective negative electrode plates 3, to each other in accordance with the case of the positive electrode shelf portion 6.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

(Evaluation)

In the present specification, the life performance in each of a deep discharge cycle test and a high temperature cycle test is evaluated by the following procedure. The increase in hydrogen overvoltage in the negative electrode plate is evaluated based on the amount of overcharge electricity. The amount of overcharge electricity is measured by the following procedure.

(1) Life performance in deep discharge cycle test

A deep discharge cycle test is conducted at a 50% depth of discharge (50% DOD), and life performance is evaluated by a discharge end voltage. For the evaluation, a lead-acid battery including seven positive electrode plates and eight negative electrode plates per cell and having a rated voltage of 2 V/cell.

Specifically, a cycle of discharge and charge of the lead-acid battery in a fully charged state is repeated at 40°C $\pm$ 2°C under the following conditions. Here, the discharge end voltage in discharge at 50% DOD in each cycle is measured and monitored. The time point at which the voltage in discharge at 50% DOD falls below 1.67 V/cell is defined as a time at which the life is exhausted. The life performance is evaluated on the basis of a cycle number at the time when the life is exhausted.

Discharge: discharged at a constant current of Y $\times$ In (A) for 2 hours (50% DOD).

Charge: charged at a constant voltage of 2.6 V/cell for 5 hours at a maximum current of Y $\times$ In (A).

Here, In (A) is a current value (A) obtained by dividing the rated n-hour rate capacity (Ah) of the lead-acid battery by n. Y = n/4. For example, when a lead-acid battery having a rated 20-hour rate capacity of 30 Ah is used, In = 30/20 = 1.5 (A) and Y = 20/4 = 5.

When the specific gravity of the electrolyte solution is measured after the deep discharge cycle test, the electrolyte solution is collected in each of the upper part (a part within 10 mm from the liquid level of the electrolyte solution in a downward direction) and the lower part (a part within 10 mm from the lower end of the negative electrode plate in an upward direction) in the container of the lead-acid battery after the test, and the specific gravity is measured.

(2) Life performance in high temperature cycle test

The high temperature cycle test is conducted in accordance with SAE J 2801 (High Temperature Stability Test). More specifically, the test is conducted under the conditions shown in Table 1. Here, for each charge-discharge cycle, the discharge end voltage, the charge end current, and the open circuit voltage (OCV) in step 20 are measured and monitored. A time point at which at least one of the following conditions (a) to (c) is satisfied is defined as a time at which the life is exhausted. The life performance is evaluated on the basis of a cycle number at the time when the life is exhausted. For the test, a lead-acid battery including seven positive electrode plates and eight negative electrode plates per cell and having a rated voltage of 12 V.

(a) Each discharge end voltage is 7.2 V or less.

(b) Each charge end current exceeds 15 A.
(c) The OCV in step 20 is less than 12.0 V.

[Table 1]

| | Step | Current, voltage | Time | Temperature |
|---|---|---|---|---|
| 1 | Measured (OCV measured) | | | |
| 2 | Discharge | 25A | 18sec | 75±3°C |
| 3 | Charge | 14.2V/25A | 30min | |
| 4 | Discharge | 3A | 15min | |
| 5 | Charge | 14.2V/25A | 30min | |
| 6 | Discharge | 25A | 18sec | |
| 7 | Charge | 14.2V/25A | 30min | |
| 8 | Discharge | 3A | 15min | |
| 9 | Charge | 14.2V/25A | 30min | |
| 10 | Discharge | 3A | 15min | |
| 11 | Charge | 14.2V/25A | 29min24sec | |
| 12 | Repeat 2 to 11 six cycles | | | |
| 13 | Discharge | 10A | 15min | |
| 14 | Charge | 14.2V/25A | 4h15min | |
| 15 | Repeat 2 to 14 five cycles | | | |
| 16 | Repeat 2 to 11 four cycles | | | |
| 17 | Discharge | 10A | 15min | |
| 18 | Charge | 14.2V/25A | 2h | |
| 19 | Stand | - | 28h (to 33h) | |
| 20 | Measured (OCV measured) | | | |
| 21 | Determined discharge | 200A | 10sec | 75±3°C |
| 22 | Charge | 14.2V/25A | 10min | |
| 23 | Back to 2 | | | |

(3) Amount of overcharge electricity

For the measurement of the amount of overcharge electricity, a lead-acid battery including seven positive electrode plates and eight negative electrode plates per cell and having a rated voltage of 2 V/cell. In order to set a more overcharge condition than the normal 4-10 min test specified in JIS D 5301: 2019, a test of one minute of discharge and ten minutes of charge (1-10 min test) is performed at 75°C $\pm$ 3°C (high temperature light load test). In the high temperature light load test, discharge and charge of a lead-acid battery in a fully charged state is repeated 1,220 cycles, with the discharge and charge being performed under the following conditions. The amount of overcharge electricity (amount of charge-discharge capacity) in each cycle up to 1220 cycles is summed to determine the integrated value of the amount of overcharge electricity (Ah), and the amount of overcharge electricity is evaluated on the basis of this integrated value. The smaller the amount of charge, the higher the hydrogen overvoltage.

Discharge: 25 A, one minute
Charge: 2.47 V/cell, 25 A, ten minutes
Water bath temperature: 75°C $\pm$ 3°C

[Examples]

Hereinafter, the present invention is specifically described on the basis of examples and comparative examples, but the present invention is not limited to the following examples.

<<Lead-acid batteries E1 to E16, R1 to R5 and C1 to C4>>

(1) Preparation of lead-acid battery

(a) Preparation of negative electrode plate

A lead powder as a raw material, a polymer compound shown in Tables 2 to 4, sodium lignin sulfonate, a carbonaceous material (carbon black), and barium sulfate are mixed with an appropriate amount of an aqueous sulfuric acid solution to obtain a negative electrode paste. At this time, the components are mixed so that the content of the polymer compound in the negative electrode material is a value shown in the table, the content of sodium lignin sulfonate is 0.1 mass%, the content of carbon black is 0.2 mass% and the content of barium sulfate is 0.4 mass% as determined by the above-described procedures. Mn of PPG as a polymer compound is 2000 as determined by the above-described procedure. A mesh portion of an expanded grid made of a Pb-Ca-Sn alloy is filled with the negative electrode paste, which is then cured and dried to obtain a non-formed negative electrode plate.

When the polymer compound has a repeating structure of oxyethylene units, a peak derived from $-CH_2-$ of the oxyethylene unit is observed in a chemical shift range of 3.2 ppm or more and 3.8 ppm or less in a $^1$H-NMR spectrum of the polymer compound which is measured by the foregoing procedure. When the polymer compound has a repeating structure of oxypropylene units, a peak derived from $-CH_2-$ of the oxypropylene unit is observed in a chemical shift range of 3.2 ppm or more and 3.42 ppm or less and a peak derived from $-CH<$ and $-CH_2-$ of the oxypropylene unit is observed in a chemical shift range of more than 3.42 ppm and 3.8 ppm or less in the $^1$H-NMR spectrum of the polymer compound which is measured by the foregoing procedure. In the $^1$H-NMR spectrum, a ratio of an integrated value of the peak of 3.2 ppm to 3.8 ppm to the sum of the integrated value of the peak of 3.2 ppm to 3.8 ppm, an integrated value of a peak of hydrogen atoms of the $-CH_2-$ group bonded to the oxygen atom, and an integrated value of a peak of a hydrogen atom of the $-CH<$ group bonded to the oxygen atom is 96 to 100%.

(b) Preparation of positive electrode plate

Lead powder as raw material is mixed with a sulfuric acid aqueous solution to obtain a positive electrode paste. The positive electrode paste is filled into a mesh portion of a Pb or Pb alloy expanded grid as a positive current collector, and cured and dried to obtain a non-formed positive electrode plate. As the Pb alloy forming the positive current collector, a Pb-Ca-Sn-based alloy is used. The content of Sn in the Pb positive current collector is 0 mass% and the content of Sn in the Pb-Ca-Sn-based alloy positive current collector is 0.8 mass% or 1.6 mass% as determined by the above-described procedure.

(c) Preparation of test battery

As a test battery used for evaluation of life performance and the amount of overcharge electricity in a deep discharge cycle test, a lead-acid battery having a rated voltage of 2 V/cell and a rated 20-hour rate capacity of 30 Ah is prepared. As a test battery used for evaluation of life performance in a high temperature cycle test, a lead-acid battery having a rated voltage of 12 V and a rated 20-hour rate capacity of 59 Ah is prepared. In each lead-acid battery, the element includes seven positive electrode plates and eight negative electrode plates. One of the positive electrode plate and the negative electrode plate is housed in a bag-shaped separator, and laminated alternately with the other electrode plate to form an element. As the bag-shaped separator, a bag-shaped separator formed of a polyethylene microporous film including a rib protruding toward the positive electrode plate is used. The average thickness of the base portion in the bag-shaped separator is 0.25 mm, and the average height of the rib is 0.55 mm. In each lead-acid battery, an electrode plate as shown in Tables 2 to 4 is housed in the bag-shaped separator.

The element is housed in a polypropylene container together with an electrolyte solution (sulfuric acid aqueous solution), and subjected to formation in the container to prepare a flooded-type lead-acid battery. The lead-acid battery is brought into substantially a fully charged state by formation. The specific gravity of the electrolyte solution in the lead-acid battery in the fully charged state at 20°C is 1.28.

(2) Evaluation

(a) Life performance and specific gravity difference of electrolyte solution in deep discharge cycle test

Using the test battery, life performance in a deep discharge cycle test is evaluated by the above-described procedure. The life performance of each lead-acid battery in a deep discharge cycle test is evaluated by a ratio to a cycle number at the time when the life of the lead-acid battery C1 is exhausted, with the cycle number defined as 100. The larger the ratio, the better the life performance.

By the above-described procedure, the specific gravity of the electrolyte solution is measured in the upper part and the lower part of the container after the deep discharge cycle test, and the specific gravity in the upper part is subtracted from the specific gravity in the lower part to determine a specific gravity difference of the electrolyte solution.

(b) Life performance in high temperature cycle test

Using the test battery, life performance in a high temperature cycle test is evaluated by the above-described procedure. The life performance of each lead-acid battery in a high temperature cycle test is evaluated by a ratio to a cycle number at the time when the life of the lead-acid battery C1 is exhausted, with the cycle number defined as 100. The larger the ratio, the better the life performance.

(c) Amount of overcharge electricity

The integrated value of the amount of overcharge electricity is measured by the foregoing procedure using the test battery. The amount of overcharge electricity of each lead-acid battery is evaluated as a ratio to the integrated value (Ah) of the amount of the overcharge electricity of the lead-acid battery C1 which is defined as 100.

Tables 2 to 4 show the results. Tables 2 to 4 also show the content of Sn in the positive current collector. Table 4 also shows Mn and HLB of the polymer compound. Mn of polypropylene glycol (PPG) is Mn determined by the above-described procedure. Mn of the etherified product or the esterified product of polyethylene glycol is Mn of the esterified product or the etherified product used for preparing the negative electrode material. Some of the data in Table 2 is selectively shown in Table 3. E1 to E16 correspond to examples. R1 to R5 correspond to reference examples. C1 to C4 correspond to comparative examples.

[Table 2]

| Battery No. | Polymer compound | | Sn content (mass%) | Electrode housed in separator | Specific gravity difference of electrolyte solution | Deep discharge cycle life performance | High temperature cycle life performance | Amount of overcharge electricity |
| --- | --- | --- | --- | --- | --- | --- | --- | --- |
| | Type | Content (mass ppm) | | | | | | |
| C1 | - | 0 | 0 | Negative electrode | 155 | 100 | 100 | 100 |
| C2 | - | 0 | 0 | Positive electrode | 95 | 126 | 65 | |
| R1 | PEG oleate | 30 | | | | 124 | 68 | |
| R2 | | 100 | | | | 120 | 73 | |
| R3 | | 300 | | | | 116 | 79 | |
| R4 | | 500 | | | | 113 | 86 | |
| R5 | | 600 | | | | 91 | 90 | |
| C3 | - | 0 | 0.8 | Positive electrode | 94 | 127 | 106 | |
| E1 | PEG oleate | 30 | | | | 123 | 120 | |
| E2 | | 100 | | | | 121 | 135 | |
| E3 | | 300 | | | | 116 | 155 | 61 |
| E4 | | 500 | | | | 113 | 172 | |
| E5 | | 600 | | | | 89 | 185 | |

(continued)

| Battery No. | Polymer compound Type | Polymer compound Content (mass ppm) | Sn content (mass%) | Electrode housed in separator | Specific gravity difference of electrolyte solution | Deep discharge cycle life performance | High temperature cycle life performance | Amount of overcharge electricity |
|---|---|---|---|---|---|---|---|---|
| C4 | - | 0 | | | 94 | 125 | 111 | |
| E6 | PEG oleate | 30 | | | | 124 | 128 | |
| E7 | | 100 | 1.6 | Positive electrode | | 120 | 144 | |
| E8 | | 300 | | | | 117 | 162 | 60 |
| E9 | | 500 | | | | 112 | 180 | |
| E10 | | 600 | | | | 90 | 192 | |
| E11 | PPG | 500 | 1.6 | Positive electrode | 96 | 107 | 130 | 59 |

PEG oleate: Polyethylene glycol oleic acid ester
PPG: Polypropylene glycol

[Table 3]

| Battery No. | Polymer compound Type | Polymer compound Content (mass ppm) | Sn content (mass %) | Electrode housed in separator | Specific gravity of electrolyte solution | Deep discharge cycle life performance | High temperature cycle life performance | Amount of overcharge electricity |
|---|---|---|---|---|---|---|---|---|
| C1 | - | 0 | 0 | Negative electrode | 155 | 100 | 100 | 100 |
| C2 | - | 0 | 0 | Positive electrode | 95 | 126 | 65 | |
| C3 | - | 0 | 0.8 | Positive electrode | 94 | 127 | 106 | |
| C4 | - | 0 | 1.6 | Positive electrode | 94 | 125 | 111 | |
| R3 | PEG oleate | 300 | 0 | Positive electrode | | 116 | 79 | |
| E3 | | 300 | 0.8 | Positive electrode | | 116 | 155 | 61 |
| E8 | | 300 | 1.6 | Positive electrode | | 117 | 162 | 60 |

PEG oleate: Polyethylene glycol oleic acid ester

As shown in Table 3, if the positive electrode plate is housed in the bag-shaped separator, life performance in a high temperature cycle test is deteriorated although as life performance in a deep discharge cycle test is improved as compared to a case where the negative electrode plate is housed in the bag-shaped separator (comparison between C1 and C2). When the positive current collector contains Sn, life performance in a high temperature cycle test is improved to some extent while high life performance in a deep discharge cycle test is maintained (comparison between C2 and C3 and C4). If the positive electrode plate is housed in the bag-shaped separator, life performance in a high temperature cycle test is deteriorated although life performance in a deep discharge cycle test is improved to some extent because the negative electrode material contains a polymer compound (comparison between C2 and R3). The result of the life performance in a deep discharge cycle test corresponds to the specific gravity difference of the electrolyte solution, and suggests that life performance in a deep discharge cycle test is enhanced when there is little specific gravity difference, so that stratification is suppressed.

On the other hand, when a positive electrode plate including a positive current collector containing Sn is housed in the bag-shaped separator, and combined with a negative electrode plate including a negative electrode material containing a polymer compound, it is possible to secure significantly improved life performance in a high temperature cycle test while securing relatively high life performance in a deep discharge cycle test (E3E8). For example, for life performance in a high temperature cycle test, the effect of improvement by Sn in the positive current collector is 41% according to C2 and C3, and the effect of improvement by the presence of a polymer compound in the negative electrode material is 14% according to C2 and R3. Thus, it is predicted from C2, C3 and R3 that when a positive electrode plate including a positive current collector containing Sn is housed in the bag-shaped separator, and combined with a negative electrode plate including a negative electrode material containing a polymer compound, the life performance in a high temperature cycle test is 65 + 41 + 14 = 120%. Actually, however, in E3, the life performance in a high temperature cycle test is 155%, and as this value is much larger than a predicted value of 120%, a synergistic effect is obtained. In E3 and E8, the amount of overcharge electricity is smaller than that in C1, which suggests that the hydrogen overvoltage in the negative electrode plate increases. The increase in hydrogen overvoltage may be caused by the polymer compound contained in the negative electrode material, and contribute to excellent life performance in a high temperature cycle test.

As shown in Table 2, the content of the polymer compound in the negative electrode material is preferably 20 ppm or more or 30 ppm or more from the viewpoint of securing higher life performance in a high temperature cycle test, and may be 70 ppm or more or 100 ppm or more. The content of the polymer compound in the negative electrode material is preferably 550 ppm or less or 500 ppm or less from the viewpoint of securing higher life performance in a deep discharge cycle test.

If the content of Sn in the positive current collector is as small as less than 3 mass%, the elongation of the positive current collector typically becomes significant, leading to deterioration of life performance in a high temperature cycle test. However, even if the content of Sn is in the above-mentioned range, it is possible to secure excellent life performance in a high-temperature cycle test (E1 to E11) as shown in Table 2. From the viewpoint of securing higher life performance in a high temperature cycle test, the content of Sn in the positive current collector is preferably 0.5 mass% or more, more preferably 0.7 mass% or more, or 0.8 mass% or more.

[Table 4]

| Battery No. | Polymer compound | | | | Sn content (mass%) | Electrode housed in separator | Specific gravity difference of electrolyte solution | Deep discharge cycle life performance | High temperature cycle life performance | Amount of overcharge electricity |
|---|---|---|---|---|---|---|---|---|---|---|
| | Type | Mn | HLB | Content (mass ppm) | | | | | | |
| C1 | - | | | 0 | 0 | Negative electrode | 155 | 100 | 100 | 100 |
| E11 | PPG | 2000 | - | 500 | 1.6 | Positive electrode | 96 | 107 | 130 | 59 |
| E3 | PEG oleate | 500 | 8.4 | 300 | 1.6 | Positive electrode | 94 | 116 | 155 | 61 |
| E12 | PEG dilaurate | 630 | 7.3 | | | | 94 | 118 | 165 | 64 |
| E13 | PEG distearate | 490 | 6.6 | | | | 95 | 118 | 164 | 62 |
| E14 | PEG dioleate | 880 | 8.4 | | | | 95 | 119 | 163 | 60 |
| E15 | POE sorbitan oleate | 430 | 4.3 | | | | 94 | 117 | 162 | 61 |
| E16 | POE lauryl ether | 490 | 12.4 | | | | 94 | 108 | 159 | 83 |

PEG oleate: Polyethylene glycol oleic acid ester
PEG dilaurate: Polyethylene glycol dilauric acid ester
PEG distearate: Polyethylene glycol distearic acid ester
PEG dioleate: Polyethylene glycol dioleic acid ester
Sorbitan POE oleate: Polyoxyethylene sorbitan oleate
POE lauryl ether: Polyoxyethylene lauryl ether

As shown in Table 4, it is possible to secure high life performance in both a deep discharge cycle test and a high temperature cycle test even when an etherified product or an esterified product of a hydroxy compound having a repeating structure of oxy $C_{2-4}$ alkylene units is used. From the viewpoint of being excellent in balance of life performance in both a deep discharge cycle test and a high temperature cycle test, HLB is preferably 4 or more (or 4.3 or more) and 9 or less, or 4 or more (or 4.3 or more) and 8.5 or less.

INDUSTRIAL APPLICABILITY

The lead-acid battery according to the first aspect and the second aspect of the present invention can be suitably used as, for example, a power source for starting a vehicle (automobiles, motorcycles, etc.) and a power source for an industrial energy storage apparatus or the like such as an electric vehicle (forklift, etc.). Note that these applications are merely illustrative and not limited to these applications.

DESCRIPTION OF REFERENCE SIGNS

1: lead-acid battery
2: positive electrode plate
2a: lug portion of positive electrode plate
3: negative electrode plate
3a: lug portion of negative electrode plate
4: bag-shaped separator
5: negative electrode shelf
6: positive electrode shelf
7: negative pole
8: penetrating connection body
9: positive pole
11: element
12: container
13: partition
14: cell chamber
15: lid
16: positive electrode terminal
17: negative electrode terminal
18: vent plug

**Claims**

1. A lead-acid battery (1) comprising at least one cell including an element (11) and an electrolyte solution, wherein

   the element (11) includes a negative electrode plate (3), a positive electrode plate (2), and a bag-shaped separator (4) interposed between the negative electrode plate (3) and the positive electrode plate (2),
   the negative electrode plate (3) includes a negative current collector and a negative electrode material,
   the positive electrode plate (2) includes a positive current collector and a positive electrode material,
   the positive current collector contains Sn, and
   the bag-shaped separator (4) includes a rib protruding toward the positive electrode plate (2), and houses the positive electrode plate (2), **characterised in that** the negative electrode material contains a polymer compound having a repeating structure of oxy $C_{2-4}$ alkene units.

2. The lead-acid battery (1) according to claim 1, wherein a content of the polymer in the negative electrode material is 5 ppm or more on a mass basis.

3. The lead-acid battery (1) according to claim 1 or 2, wherein the content of the polymer in the negative electrode material is 550 ppm or less on a mass basis.

4. The lead-acid battery (1) according to any one of claims 1 to 3, wherein a content of Sn in the positive current collector is 0.5 mass% or more.

5. The lead-acid battery (1) according to any one of claims 1 to 4, wherein the content of Sn in the positive current collector is less than 3 mass%.

6. The lead-acid battery (1) according to any one of claims 1 to 5, wherein the polymer compound contains at least one selected from the group consisting of a hydroxy compound having a repeating structure of oxy $C_{2-4}$ alkylene units, an etherified product of the hydroxy compound, and an esterified product of the hydroxy compound, and
the hydroxy compound is at least one selected from the group consisting of a poly $C_{2-4}$ alkylene glycol, a copolymer having a repeating structure of oxy $C_{2-4}$ alkylene, and a poly $C_{2-4}$ alkylene oxide adduct of a polyol.

7. The lead-acid battery (1) according to claim 6, wherein the polymer compound contains the hydroxy compound, and the hydroxy compound has a repeating structure of oxypropylene units.

8. The lead-acid battery (1) according to claim 6, wherein the polymer compound has one or more hydrophobic groups, and at least one of the hydrophobic groups is a long-chain aliphatic hydrocarbon group having 8 or more carbon atoms.

9. The lead-acid battery (1) according to claim 6 or 8, wherein the polymer compound contains at least one selected from the group consisting of the etherified product and the esterified product, and
each of the etherified product and the esterified product has a repeating structure of oxyethylene units.

10. The lead-acid battery (1) according to claim 9, wherein the polymer compound has an HLB of 4 or more and 9 or less.

**Patentansprüche**

1. Blei-Säure-Batterie (1), umfassend mindestens eine Zelle, die ein Element (11) und eine Elektrolytlösung enthält, wobei

das Element (11) eine negative Elektrodenplatte (3), eine positive Elektrodenplatte (2) und einen beutelförmigen Separator (4), der zwischen der negativen Elektrodenplatte (3) und der positiven Elektrodenplatte (2) angeordnet ist, aufweist,
die negative Elektrodenplatte (3) einen negativen Stromkollektor und ein negatives Elektrodenmaterial aufweist,
die positive Elektrodenplatte (2) einen positiven Stromkollektor und ein positives Elektrodenmaterial aufweist,
der positive Stromkollektor Sn enthält und
der beutelförmige Separator (4) eine Rippe aufweist, die in Richtung der positiven Elektrodenplatte (2) vorsteht, und die positive Elektrodenplatte (2) aufnimmt, **dadurch gekennzeichnet, dass** das negative Elektrodenmaterial eine Polymerverbindung enthält, die eine sich wiederholende Struktur aus Oxy-$C_{2-4}$-Alken-Einheiten aufweist.

2. Blei-Säure-Batterie (1) nach Anspruch 1, wobei ein Gehalt des Polymers in dem negativen Elektrodenmaterial 5 ppm oder mehr, bezogen auf die Masse, beträgt.

3. Blei-Säure-Batterie (1) nach Anspruch 1 oder 2, wobei der Gehalt des Polymers in dem negativen Elektrodenmaterial 550 ppm oder weniger, bezogen auf die Masse, beträgt.

4. Blei-Säure-Batterie (1) nach einem der Ansprüche 1 bis 3, wobei ein Gehalt an Sn in dem positiven Stromkollektor 0,5 Massen-% oder mehr beträgt.

5. Blei-Säure-Batterie (1) nach einem der Ansprüche 1 bis 4, wobei der Gehalt an Sn in dem positiven Stromkollektor weniger als 3 Massen-% beträgt.

6. Blei-Säure-Batterie (1) nach einem der Ansprüche 1 bis 5, wobei die Polymerverbindung mindestens eines enthält, das ausgewählt ist aus der Gruppe bestehend aus einer Hydroxyverbindung mit einer sich wiederholenden Struktur aus Oxy-$C_{2-4}$-Alkyleneinheiten, einem veretherten Produkt der Hydroxyverbindung und einem veresterten Produkt der Hydroxyverbindung, und
die Hydroxyverbindung mindestens eines ist, das ausgewählt ist aus der Gruppe bestehend aus einem Poly-

C$_{2-4}$-Alkylenglykol, einem Copolymer mit einer sich wiederholenden Struktur aus Oxy-C$_{2-4}$-Alkylen und einem Poly-C$_{2-4}$-Alkylenoxid-Addukt eines Polyols.

7. Blei-Säure-Batterie (1) nach Anspruch 6, wobei die Polymer -Verbindung die Hydroxyverbindung enthält, und die Hydroxyverbindung eine sich wiederholende Struktur aus Oxypropyleneinheiten aufweist.

8. Blei-Säure-Batterie (1) nach Anspruch 6, wobei die Polymerverbindung eine oder mehrere hydrophobe Gruppen aufweist und mindestens eine der hydrophoben Gruppen eine langkettige aliphatische Kohlenwasserstoffgruppe mit 8 oder mehr Kohlenstoffatomen ist.

9. Blei-Säure-Batterie (1) nach Anspruch 6 oder 8, wobei die Polymerverbindung mindestens eines enthält, das ausgewählt ist aus der Gruppe bestehend aus dem veretherten Produkt und dem veresterten Produkt besteht, und jedes des veretherten Produkts und des veresterten Produkts eine sich wiederholende Struktur aus Oxyethyleneinheiten aufweist.

10. Blei-Säure-Batterie (1) nach Anspruch 9, wobei die Polymerverbindung einen HLB-Wert von 4 oder mehr und 9 oder weniger aufweist.

## Revendications

1. Batterie au plomb-acide (1) comprenant au moins une cellule incluant un élément (11) et une solution électrolytique, dans laquelle

l'élément (11) comporte une plaque d'électrode négative (3), une plaque d'électrode positive (2), et un séparateur en forme de poche (4) intercalé entre la plaque d'électrode négative (3) et la plaque d'électrode positive (2), la plaque d'électrode négative (3) comporte un collecteur de courant négatif et un matériau d'électrode négative, la plaque d'électrode positive (2) comporte un collecteur de courant positif et un matériau d'électrode positive, le collecteur de courant positif contient du Sn, et le séparateur en forme de poche (4) comporte une nervure faisant saillie vers la plaque d'électrode positive (2), et reçoit la plaque d'électrode positive (2), **caractérisée en ce que** le matériau d'électrode négative contient un composé polymère ayant une structure répétée de motifs oxy-alcène en C$_2$ à C$_4$.

2. Batterie au plomb-acide (1) selon la revendication 1, dans laquelle une teneur en polymère dans le matériau d'électrode négative est de 5 ppm ou plus sur une base massique.

3. Batterie au plomb-acide (1) selon la revendication 1 ou 2, dans laquelle la teneur en polymère dans le matériau d'électrode négative est de 550 ppm ou moins sur une base massique.

4. Batterie au plomb-acide (1) selon l'une quelconque des revendications 1 à 3, dans laquelle une teneur en Sn dans le collecteur de courant positif est de 0,5 % en masse ou plus.

5. Batterie au plomb-acide (1) selon l'une quelconque des revendications 1 à 4, dans laquelle la teneur en Sn dans le collecteur de courant positif est inférieure à 3 % en masse.

6. Batterie au plomb-acide (1) selon l'une quelconque des revendications 1 à 5, dans laquelle le composé polymère contient au moins un choisi parmi le groupe constitué d'un composé hydroxy ayant une structure répétée de motifs oxy-alkylène en C$_2$ à C$_4$, un produit éthérifié du composé hydroxy, et un produit estérifié du composé hydroxy, et le composé hydroxy est au moins un choisi parmi le groupe constitué d'un polyalkylène glycol en C$_2$ à C$_4$, d'un copolymère ayant une structure répétée d'oxy-alkylène en C$_2$ à C$_4$, et d'un adduit d'oxyde de polyalkylène en C$_2$ à C$_4$ d'un polyol.

7. Batterie au plomb-acide (1) selon la revendication 6, dans laquelle le composé polymère contient le composé hydroxy, et le composé hydroxy a une structure répétée de motifs oxypropylène.

8. Batterie au plomb-acide (1) selon la revendication 6, dans laquelle le composé polymère a un ou plusieurs groupes hydrophobes, et au moins un des groupes hydrophobes est un groupe hydrocarbure aliphatique à chaîne longue possédant 8 atomes de carbone ou plus.

9. Batterie au plomb-acide (1) selon la revendication 6 ou 8, dans laquelle le composé polymère contient au moins un choisi parmi le groupe constitué du produit éthérifié et du produit estérifié, et
chacun du produit éthérifié et du produit estérifié a une structure répétée de motifs oxyéthylène.

10. Batterie au plomb-acide (1) selon la revendication 9, dans laquelle le composé polymère a une valeur HLB de 4 ou plus et de 9 ou moins.

Fig. 1

**EP 4 254 549 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000149981 A
- JP 9147874 A
- JP 5307949 A